# EUROPEAN PATENT APPLICATION

(11) **EP 1 418 789 A1**
(43) Date of publication of application: **12.05.2004**
(21) Application number: 02360304.6
(22) Date of filing: 05.11.2002
(51) Int. Cl.: H04Q 11/04

(54) **Universal network termination**

(71) Applicant: ALCATEL, 75008 Paris (FR)
(72) Inventor: Rothenhöfer, Karl, Dipl.-Ing., 71229 Leonberg (DE); Wingerath, Norbert, Dipl.-Ing., 71701 Schwieberdingen (DE)
(74) Representative: Zinsinger, Norbert

(57) **Abstract**

The invention concerns a method for supporting communication between a switching system (1) and a PSTN terminal (24,28,29) connected with a network termination unit (31 to 34) through an analog subscriber line (57,60,61), and a network termination unit (31 to 34) and a subscriber line board (41,42) of the switching system (1) to perform this method. Broadband traffic packets as well as a number of synchronous channels are transferred in both directions over a subscriber line (51 to 54) between the network terminaition unit (31 to 34) and the subscriber line board (41,42) of the switching system (1), in particular over one or several twisted pair lines. At least one ISDN-B channel and one ISDN-D channel is provided based on such synchronous channels. A protocol converter converts between an analog loop signaling applied on the analog subscriber line (57,60,61) and digital signaling messages transported over the ISDN-D channel. An analog to digital conversion is performed between the analog subscriber line and the ISDN-B channel.

## Description

The present invention relates to a method for supporting communication between a switching system and a PSTN terminal (PSTN = Public Switched Telephone Network) connected with a network termination unit through an analog subscriber line, a network termination unit for supporting communication between a switching system and one or several terminals connected with a termination unit through associated subscriber lines, and to a subscriber line board of a switching system for supporting communication between the switching system and one or several terminals connected with the subscriber line board through associated subscriber lines.

Today's broadband digital subscriber lines use separate bandwidth for providing narrow band and broadband services. The frequency ranges for accessing and providing the two services are divided by splitters.

For example, the so called asymmetrical digital subscriber line (ADSL) provides a high speed down-link and a low speed up-link and is primarily suitable for end-users to use the Internet. Often, the service is combined with an ISDN basic rate access (ISDN = Integrated Services Digital Network). For small businesses with the desire to have more telephone lines and are less interested in the use of the Internet this approach might not be advantageous.

Further, the single-pair high-speed digital subscriber line (SHDSL) provides additional support for narrow band by packetising of narrow band and transporting it in this form over the subscriber line. SHDSL transceivers are designed primarily for duplex operation over mixed gauge two-wire twisted metallic pairs. Optional four-wire operation is supported for extended applications. Optional signal regenerators for both single-pair and two-pair operation are specified, as well. SHDSL transceivers are capable of supporting selected symmetric user data rates in the range of 192 kbit/s to 2.312 kbit/s using a Trellis Coded Pulse Amplitude Modulation (TC-PAM) line code. They are designed to be spectrally compatible with other transmission technologies deployed in the access network, including other DSL technologies.

SHDSL transceivers do not support the use of analog splitting technology for coexistent with either analog PSTN technology or ISDN. But, narrow band transport is possible within inband TDM channels (TDM = Time Division Multiplex).

Further, the symmetric single-pair high bit rate digital subscriber line (SDSL) provides bi-directional symmetrical high bit rate transmission on a single metallic wire pair using the echo cancellation method. Like ADSL, it provides digital access over existing, unshielded wire pairs. The frame structure provides the flexibility to transport variable payload bit rates from 192 kbit/s up to 2.312 kbit/s and the option of plesiochronous or synchronous mode.

It is the object of the present invention to improve present broadband digital subscriber line systems.

The object of the present invention is achieved by a method for supporting communication between a switching system and a PSTN terminal connected with a network termination unit through an analog subscriber line, the method comprising the steps of: transferring in both directions over a subscriber line between the network termination unit and the subscriber line board of the switching system, in particular over one or several twisted pair lines, broadband packet traffic as well as a number of synchronous channels; providing at least one ISDN-B channel and one ISDN-D channel based on such synchronous channels; converting between analog loop signaling applied on the analog subscriber line and digital signaling messages transported over the ISDN-D channel; and performing an analog to digital conversion between the analog subscriber line and the ISDN-B channel. The object of the present invention is further achieved by a network termination unit for supporting communication between a switching system and one or several terminals connected with the network termination unit through associated subscriber lines, the network termination unit comprises: a DSL transceiver unit, in particular a SHDSL transceiver unit, for transferring in both directions over a subscriber line connecting the network termination unit with the switching system, in particular over one or several twisted pair lines, broadband packet traffic as well as a number of synchronous channels, the DSL transceiver unit providing a pool of ISDN-B and ISDN-D channels based on such synchronous channels, where the number of ISDN-B channels of the pool range from 1 trough n and the number of ISDN-D channels of the pool range from 1 through m; and at least one analog subscriber line termination unit to be connected with a PSTN terminal through an analog subscriber line, the analog subscriber line termination unit comprising a protocol converter for converting between analog loop signaling applied on the analog subscriber line and signaling messages transported over one of the ISDN-D channels of the pool of the ISDN channels provided by the DSL transceiver, and the analog subscriber line termination unit comprising a bearer channel connector performing an analog to digital conversion between the analog subscriber line and one of the ISDN-B channels of the pool of ISDN channels provided by the DSL transceiver. The object of the present invention is further achieved by a subscriber line board of a switching system for supporting communication between the switching system and one or several terminals connected with the subscriber line board through associated subscriber lines, the subscriber line board comprises: a number of DSL transceiver units, in particular SHDSL transceiver units, for transferring in both directions over an associated subscriber line, in particular over one or several twisted pair lines, broadband packet traffic as well as a number of synchronous channels, the DSL transceiver unit providing a pool of ISDN-B and ISDN-D channels based on such synchronous channels, where the number of ISDN-B channels of the pool range from 1 through n and the number of ISDN-D channels of the pool range from 1 through m; a broadband interface unit connected with the number of DSL transceiver units for handling the broadband packet traffic exchanged with terminals to be connected with subscriber lines through a network termination unit comprising a DSL transceiver unit; and a narrow band interface unit connected with the DSL transceiver unit for handling data exchanged over the synchronous channels, the narrow band interface unit comprising a protocol converter for converting between the internal protocol of the switching system and signaling messages representing analog loop signaling, the signaling messages are transported over an ISDN-D channel provided by the DSL transceiver unit.

### Several advantages are achieved by this invention:

The invention helps to decrease equipment costs and increase the quality of service provided to subscribers. It makes it possible to reuse parts of already existing services and technologies to provide a high quality narrow band service for PSTN terminals. Narrow band POT traffic (POT = Plane Old Telephone) is transmitted with ISDN-quality. It avoids bit interleaving and the need to provide echo-cancellation. Further, it offers a high degree of flexibility which increases the user-friendliness and decreases equipment costs. Due to double-use of common equipment parts and common software building blocks for different communication services, cost-savings are achieved for both, for subscriber line boards and for network termination units.

Since it make better use of low frequencies, further advantages are achieved with respect to total available bandwidth and maximum possible distance between subscriber line boards and network termination units.

Further advantages are achieved by the embodiments of the invention indicated by the dependent claims.

According to a preferred embodiment of the invention, the protocol converter converts between a NMDS protocol (NMDS = Narrow Band Multi-service Delivery System) and the signaling protocol applied on the analog subscriber line. For example, a SHDSL connection is used via which a fixed or variable number of synchronous connections may be run. The rest remains for data traffic in packet form (e.g. Internet). Analog telephones are connectable via suitable access devices applying the NMDS standard on top of ISDN. This provides the capability to operate analog and ISDN subscriber connected to a common network termination unit over a single subscriber line.

This allows a cost efficient implementation of universally applicable equipment that can be used to introduce provisioning of broadband access while maintaining support to what the ever analog or ISDN usage that existed so far at given subscriber premises.

Further advantages are achieved by incorporating in the network termination unit an ISDN subscriber line termination unit to be connected with at least one ISDN terminal through at least one ISDN subscriber line. The ISDN subscriber line unit comprises a connector for connecting the ISDN subscriber line with an ISDN channel of the pool of ISDN channels provided by the DSL transceiver. This improves the flexibility of the whole system.

A more efficient use of the available bandwidth is achieved by incorporating in the network termination unit a control unit for dynamically allocating ISDN-B channels of the pool of ISDN channels to analog subscriber line termination units. Further improvements are achieved, if the control unit dynamically varies the numbers of ISDN channels of the pool of ISDN channels by triggering the establishment and/or release of synchronous channels provided by the DSL transceiver unit.

Further, the control unit may allocate ISDN-B channels of the pool of ISDN channels to analog subscriber line termination units and to ISDN subscriber lines. This improves both, flexibility and efficient use of bandwidth.

A cost efficient and universally applicable equipment is achieved by providing a universal network termination unit comprising a PSTN interface served by at least two analog subscriber line termination units, an ISDN interface served by at least one ISDN line termination unit, and at least one broadband access interface for exchanging broadband packet traffic served by the DSL transceiver unit. Such a network termination unit is well suitable for small PBXs (PBX = Private Branch Exchange).

According to a preferred embodiment of the invention, the subscriber line board is a universal subscriber line board comprising a number of ISDN connection units and a number PSTN connection units, and a common subscriber line connection unit for variably connecting the subscriber lines with DSL transceiver units, ISDN connection units and PSTN connection units. Due to this design, it becomes possible to use the same line board for providing a termination of a broadband digital subscriber line, an ISDN subscriber line or a PSTN subscriber line. This makes it possible to adapt the kind of communication services provided via a subscriber line to the needs of the subscriber fast and efficiently. Replacements of line boards are avoided. Multiple exploitations become possible through the implementation of such universal subscriber line boards. Further, it increases the costs efficiency of the whole switching system.

These as well as other features and advantages of the invention will be better appreciated by reading the following detailed description of presently preferred exemplary embodiments taken in conjunction with the accompanying drawings of which:
- Fig. 1: is a block diagram which shows a communication system comprising several subscriber line boards and network termination units according to the present invention.
- Fig. 2: is a block diagram showing a detailed structure of a network termination unit of Fig. 1.
- Fig. 3: is a block diagram showing details of the communication system of Fig. 1.
- Fig. 4: is a block diagram showing details of a subscriber line board of Fig. 1.

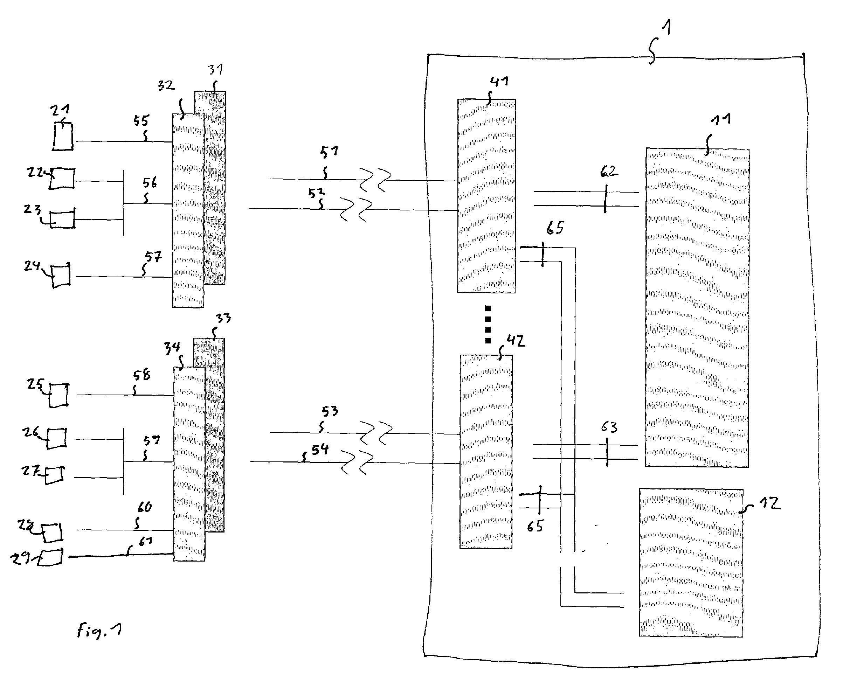

Fig. 1 shows a communication system formed by a switching system 1, several network termination units 31 to 34 and several terminals 21 to 29. The switching system 1 comprises several subscriber line boards 41 to 42, a narrow band switching unit 11 and a broadband switching unit 12.

The switching system 1 is an exchange which provides via subscriber lines communication services to a plurality of subscribers. It is possible that the exchange provides communication services to fixed and mobile terminals. Further, it provides broadband data services to fixed data terminals.

The number of installed subscriber line cards depends on the number of active subscriber lines connected with the switching system 1. Each subscriber line board has 16 ports which make it possible to connect up to 16 subscriber lines with one subscriber line board. But, it is also possible that a subscriber line board provides another number of ports to be connected with subscriber lines.

Fig. 1 shows a part of the switching system 1 comprising a cluster of 16 subscriber line boards, wherein the subscriber line board 41 represents the first subscriber line board of the cluster and the subscriber line board 42 represents the sixteenth subscriber line boards of the cluster.

Further, Fig. 1 shows four subscriber lines 51 to 54. The subscriber line 51 represents a subscriber line connected with the first port of the subscriber line board 41 and the subscriber line 52 represents the subscriber line connected with the sixteenth port of the subscriber line board 41. Even, the subscriber line 53 represents the subscriber line connected with the first port of the subscriber line board 42 and the subscriber line 54 represents the subscriber line connected with the sixteenth port of the subscriber line board 42.

The subscriber lines 51, 52, 53 and 54 are connected with the network termination units 31, 32, 33 and 34, respectively. But, it is also possible that one network termination unit is connected with a subscriber line board via two or more subscriber lines.

The subscriber lines 51 to 54 are unshielded metallic twisted pair lines usually used to connect phones with associated local exchanges or concentrators.

The subscriber line boards 41 and 42 are connected via a cluster bus 65 with the narrow band switching unit 12 and via ATM lines 62 and 63 with the broadband switching unit 11.

The network termination units 31 to 34 are respectively connected with one or several terminals. These terminals might be computers, PSTN telephone sets or ISDN telephone sets.

By way of example, Fig. 1 shows the computers 21 and 25 connected via cables 55 and 58 with the subscriber line cards 32 and 34 and the ISDN terminals 22, 23, 26, 27 connected via subscriber lines 56 and 59 ,which have the function of So buses, with the subscriber line cards 32 and 34, respectively. The analog telephone sets 24, 28 and 29 connected via subscriber lines 57, 60 and 61 with the subscriber line cards 32 and 34, respectively.

The subscriber line cards 31 to 34 make it possible to offer beneath normal telephone services broadband data services over a normal subscriber line. The network termination units 31 to 34 comprise DSL transceiver units, in particular a SHDSL transceiver units, for transferring in both direction over the subscriber lines 51 to 54 broadband packet traffic as well as a number of synchronous channels. Further, the DSL transceiver unit provides a pool of ISDN-B and ISDN-D channels based on such synchronous channels. The number of ISDN-B channels of the pool range from 1 through n and the number of ISDN-B channels of the pool range from 1 through m. The values n and m might be different for the network termination units 31 to 34. It is possible that m = 1 or n = 1. The value of m and n normally depends on the respective needs of the subscribers assign to the network termination units 31 to 34, respectively.

Further, the network termination units 31 to 34 respectively comprise at least one analog subscriber line termination unit. For example, the network termination unit 32 comprises one analog subscriber line termination unit which is connected with the PSTN terminal 24 through the analog subscriber line 57, and the termination unit 34 comprises two analog subscriber line termination units connected with the PSTN terminals 28 and 29 through the analog subscriber lines 60 and 61, respectively. Each of these analog subscriber line termination units has a protocol converter for converting between analog loop signaling applied on the analog subscriber line and signaling messages transported over one of the ISDN-D channels of the pool of ISDN channels provided by the DSL transceiver. Further, they have a bearer channel connector performing an analog to digital conversion between the analog subscriber line and one of the ISDN-B channels of the pool of ISDN channels provides by the DSL transceiver.

Even, the subscriber line boards 41 and 42 associated to the network termination units 31 to 34, respectively, have such kind of DSL transceiver units communicating with the DSL transceiver units of the network termination units 31 to 34, respectively. Further, they comprise a broadband interface unit linked with the ATM line 62 and a narrow band interface unit linked with the cluster bus 65. The broadband interface unit handles the broadband packet traffic exchanged with the terminals 21 and 25. The narrow band interface unit handles the data exchanged over the synchronous channels provided by the DSL transceiver units. They comprise protocol converters which interact with the protocol converters of the network termination units 31 to 34 and convert between the internal protocol of the switching system 1 and the signaling messages representing analog loop signaling.

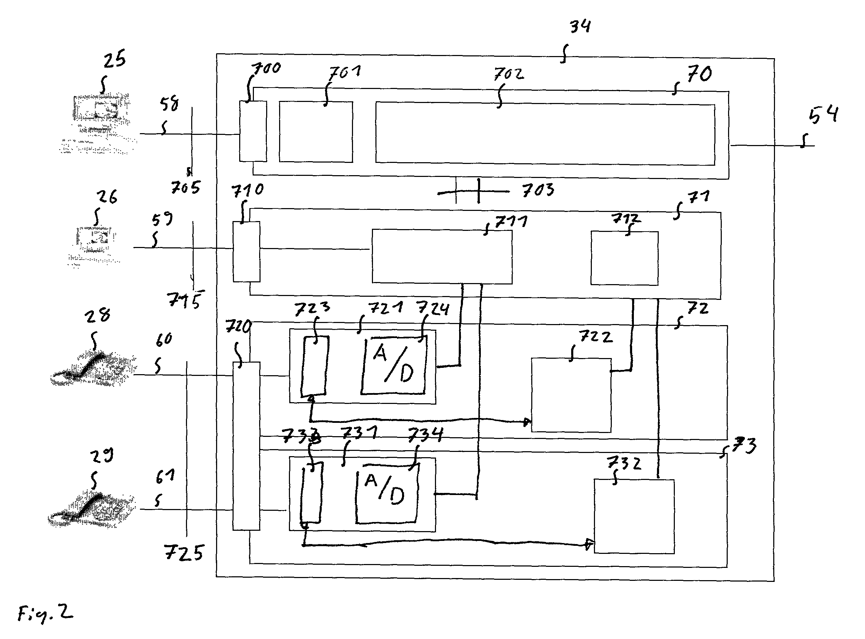

Fig. 2 shows the details of the network termination unit 34. It shows the terminals 25 to 29, the network termination unit 34, the subscriber line 54 and the cable 58 and the subscriber lines 59 to 61.

The network termination unit 34 is formed by an electronic circuit which comprises a microprocessor and software programs executed by this microprocessor. A part of the functions of the network termination unit 34 is performed by the execution of the software programs on the hardware platform provided by the electronic circuit.

But, it is also possible that the network termination unit 34 is a pure hardware implementation.

The network termination unit 34 comprises a DSL transceiver unit 70. The DSL transceiver unit 70 has a SHDSL engine 702. The SHDSL engine 702 performs all the functionalities necessary to handle the communication protocols up to the transport protocol layer for the communication between the network termination unit 34 and the subscriber line board 42. It provides a first communication service which transfers in both directions over the subscriber line 54 broadband packet traffic. It provides a second communication service which transfers in both direction over the subscriber line 54 data according to a number of synchronous TDM 64 kbit/t channels (TDM = Tine Division Multiplex). The SHDSL engine 702 might be implemented as specified in the ITU-T specification G.991.2.

But, it is possible to use instead of the SHDSL engine 702 another kind of DSL engine providing a number of synchronous channels and a communication service for broadband packet transfer.

Further, the transceiver unit 70 has a protocol unit 701 which performs protocol function with respect to the broadband access protocol used by the terminal 25. This access protocol is for example an ETHERNET protocol or any other kind of LAN protocol (LAN = Local Area Network).

Further, the DSL transceiver unit 70 comprises additional functions for mapping a number ISDN-B channels and/or ISDN-D channels to the synchronous channels provided by the SHDSL engine. The ISDN channels are provided as pool of ISDN channels 703 to the ISDN subscriber line termination unit 71.

The network termination unit 34 comprises a DSL transceiver unit 70, an ISDN subscriber line termination unit 71 and two analog subscriber line termination units 72 and 73.

The subscriber line termination units 72 and 73 comprise protocol converters 722 and 732, and bearer channel connectors 721 and 731, respectively.

The details of the analog subscriber line termination units 72 and 73 are in the following described by hand of the analog subscriber line termination unit 72:
The bearer channel connector 721 performs mainly two functions:
First, it performs an analog to digital conversion between the analog signal applying on the subscriber line 61 and the digital encoded signal of an associated ISDN-B channel.

Further, it monitors and controls the analog loop signaling applied on the subscriber line 61. It contains means 733 for monitoring on-hock or off-hock states signaled by the terminal 29. It contains means 733 for generating analog signaling messages, for example a ringing signal, which are send over the subscriber line 61 to the terminal 29. The means 733 are controlled by the protocol converter 732.

The protocol converter 732 converts between the analog loop signaling applied on the subscriber line 61 and the signaling messages transported over an ISDN-D channel. It performs a mapping between these analog signals and a respective assigned digital message. For example, the off-hock state is linked with a call establishment message and the on-hock state is linked with a connection disconnect request message.

According to a preferred embodiment of the invention, the signaling protocol applied on the subscriber line 61 is converted to messages according to the NMDS protocol (see ETSI EN301 141-1). Further, derivative protocols and future version of the NMDS protocol may be used for the signaling over the ISDN-D channel.

The network termination unit 34 comprises a PSTN interface unit 720 which enables the physical connection between the subscriber lines 60 and 61 and the circuit board of the network termination unit 34. According to this embodiment of this invention, two analog subscriber lines can be plugged in the PSTN interface unit 720. But, the number of connectable analog subscriber lines may vary with the number of the analog subscriber line termination units 72 and 73.

The ISDN subscriber line termination unit 71 comprises a connector 711 and a control unit 712. The connector 711 links ISDN-B channels of the pool of ISDN channels 703 with the analog subscriber line network termination units 72 and 73 and with ISDN terminals connected through the ISDN interface unit 710 with the network termination unit 34.

The number of connectable ISDN terminals may vary. According to this embodiment, only one ISDN terminal, the terminal 26, is connected over the ISDN subscriber line 59 with the ISDN interface unit 710.

The connector 711 is a (software) switch controlled by the control unit 712. But, it is also possible that the connector 711 is formed by a hardware-switch or by jumpers used to set the interface constellation of the network termination unit 34.

The control unit 712 dynamically allocates ISDN-B channels of the pool of ISDN channels to the analog subscriber line termination units 72 and 73 and to the ISDN subscriber lines connected with the ISDN interface unit 710.

For example, the DSL transceiver unit 70 provides two ISDN-B channels. The control unit 712 monitors the signaling messages exchanged between the terminals 26 to 29 and the switching system 1. If one of the terminals 26 to 29 requests the establishment of a connection or if the establishment of a connection to one of these terminals is requested by a switching system, the control unit 712 allocates an ISDN-B channel to this terminal. Further, the control unit 712 may dynamically vary the number of ISDN channels of the pool of ISDN channels 703. For this, it sends corresponding command messages to the SHDSL transceiver unit 70 that request the establishment or the release of synchronous channels provided by the DSL transceiver unit. By help of this mechanism, the control unit 712 dynamically adapts the number of ISDN channels of the pool 703 to the present demand.

Further, it is possible that the control unit 712 monitors the ports of the PSTN interface unit 720 and the ports of the ISDN interface unit 710 and checks which of these ports are connected with a terminal. This information becomes part of the allocation strategy of the control unit 712 and is in the following respected when allocation decisions are taken by the control unit 712.

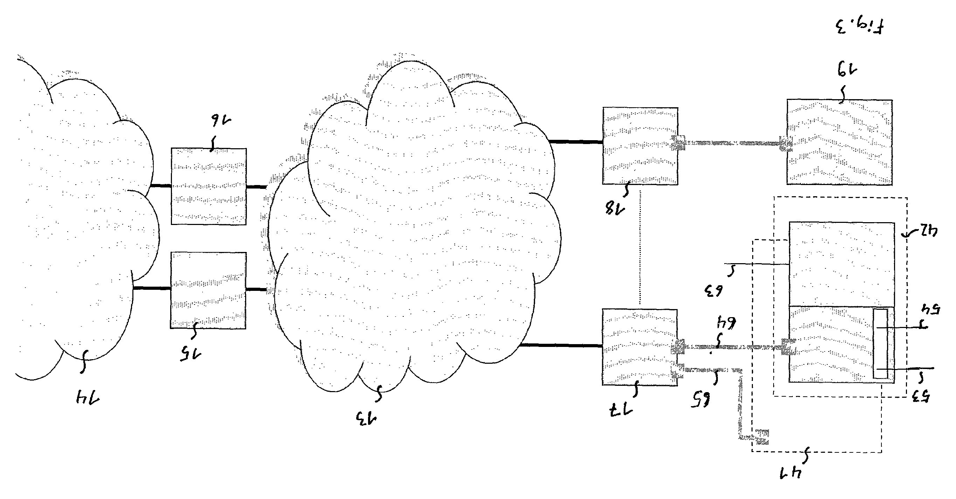

Fig. 3 shows the subscriber line boards 41 and 42, the subscriber lines 53 and 54, two up-link cards 17 and 18, two data networks 13 and 14 and two gateways 15 and 16.

The data network 14 is an IP core network (IP = Internet Protocol). The data network 13 is an ATM access network (ATM = Asynchronous Transfer Mode). The gateway 15 is an internet access gateway which provides, controls and monitors the internet access of the terminals 21 and 25.

The gateway 16 is a VolP gateway (VolP = Voice over Internet Protocol). The server 19 is a VolP mediation server.

The subscriber line boards 41 and 42 are connected over an ATM serial interface via the four wire ATM lines 64 and 65 with the up-link card 17. The subscriber line boards 41 and 42 route the broadband packed traffic received via the subscriber lines 51 to 54 to the up-link card 17. In the following, the whole broadband traffic from these line boards is routed through the ATM access network 13 and through the gateway 15 to the IP core network. If an internet access is requested by one of the terminals 55 and 58, the gateway 15 checks the subscriber data of the subscriber assigned to the subscriber lines 52 and 54, respectively, contacts the radius server of the associated internet service provider and takes based on these information the decision whether an internet access is granted or not granted.

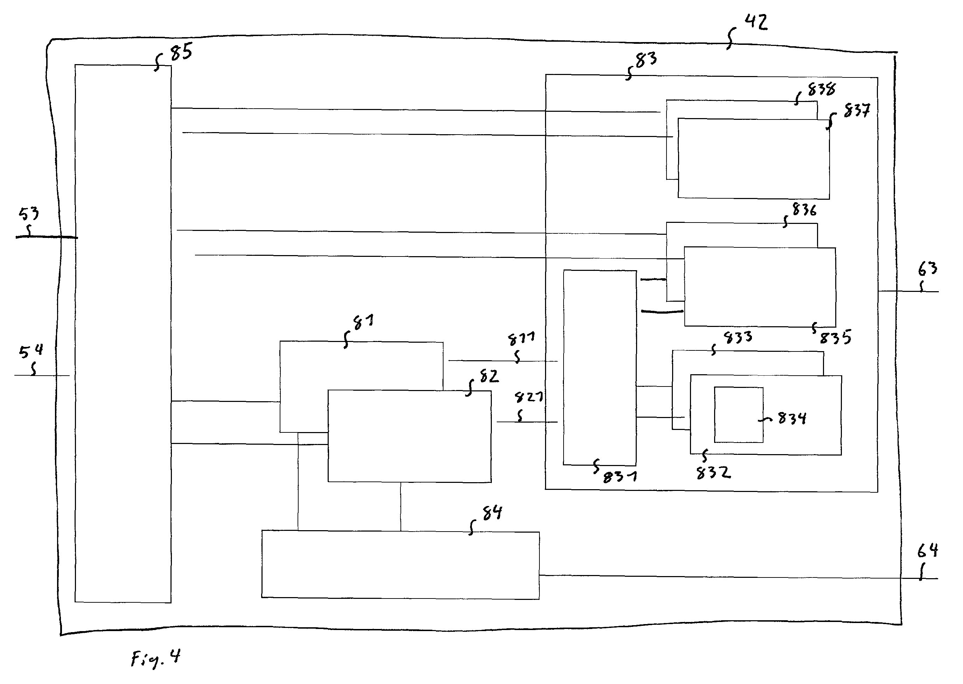

The details of the subscriber line board 42 are now described by hand of Fig. 4.

Fig. 4 shows the subscriber line board 42 connected with the subscriber lines 53 and 54, the cluster bus 53 and the ATM line 64.

The subscriber line board 42 is formed by an electronic circuit containing one or several microprocessors with associated peripheral integrated circuits. Further, the subscriber line board 42 comprising one or several software programs which are executed by these one or several microprocessors. At least some of the functions described in the following are performed by the execution of the software programs by the above described hardware platform. But, it is also possible that the electronic circuit is a pure hardware implementation.

The subscriber line board comprises two DSL transceiver units 81 and 82, a broadband interface unit 84, a narrow band interface unit 83 and a common subscriber line connection unit 85.

The DSL transceiver units 81 and 82 provide pools of ISDN channels 811 and 821, respectively. Further, they rout broadband packet traffic exchanged via the subscriber lines 53 and 54 to the broadband interface unit 84. The DSL transceiver units 81 and 82 can be arranged as the DSL transceiver unit 70 according to Fig. 2.

The broadband interface unit 84 performs routing functions for the ATM traffic received over the ATM line 64. Dependent on the respective header information, it forwards received packets to the DSL transceiver unit 81 or 82.

Further, it is possible that the broadband interface unit 84 performs protocol conversion functions.

The narrow band interface unit 83 comprises several connection units 832 to 838 and a connector 831. But, it is also possible that the narrow band interface unit 83 only comprises the connection unit 832.

The connection units 832 to 833 represent the network side counterpart of the analog subscriber line termination units 72 and 73 of Fig. 2.

The details of the connection units 832 and 833 are described in the following by hand of the connection unit 832.

The connection unit 832 comprises a protocol converter 834 which interacts with the protocol converter 732 of Fig. 2. It converts the signaling messages exchanged via an ISDN-D channel between the protocol converters 732 and 834 to signaling messages according to the internal protocol of the switching system 1. Since inband signaling, for example DTMF dialed digits, are transparently passed over the ISDN-B channel connecting the analog subscriber line termination unit 73 and the connection unit 832, the protocol converter 834 additionally comprises the respective network termination function for handling this kind of signaling.

Further, the connection unit 832 performs the necessary functions for linking the terminal 29 with an associated synchronous bearer channel established over the cluster bus 63, when the switching system 1 has established a communication connection for the terminal 29.

The ISDN connection units 835 to 836 link ISDN channels with the cluster bus 63 and performs the known network side ISDN network termination functions.

The analog connection units 837 to 838 link analog PSTN lines with the cluster bus 36 and perform the known PSTN network termination functions.

The connector 831 links the pool of ISDN channels 811 and 821 with the connection units 832 to 836. If the system provides the services described in the conjunction with the control unit 712 of Fig. 2, it interacts with the control unit 712 to perform the network side part of the ISDN channel allocation.

Further, the connector 831 may performs a dynamic allocation of connection units to ISDN channels terminated by different network termination units and may thereby drastically increase the efficiency of the subscriber line board 42.

The common subscriber line connection unit 85 is able to connect the subscriber lines 54 and 55 with any of the DSL transceiver units, the ISDN connection units or the PSTN connection units. Thereby, it is possible that the subscriber line board 42 dynamically changes the network termination functions provided for subscriber lines. Preferable, the switching functions performed by the common subscriber line connection units 85 are controlled by the network management system of the switching system 1.

But, it is also possible that the common subscriber line connection unit 85 is formed by a mechanically controlled hardware switching unit.

## Claims

1. A network termination unit (31 to 34) for supporting communication between a switching system (1) and one or several terminals (21 to 29) connected with the network termination unit (31 to 34) through associated subscriber lines (55 to 61),
**characterized in**
**that** the network termination unit (31 to 34) comprising: a DSL transceiver unit (70), in particular a SHDSL transceiver unit, for transferring in both directions over a subscriber line (51 to 54) connecting the network termination unit (31 to 34) with the switching system (1), in particular over one or several twisted pair lines, broadband packet traffic as well as a number of synchronous channels, the DSL transceiver unit (70) providing a pool of ISDN-B and ISDN-D channels (703) based on such synchronous channels, where the number of ISDN-B channels of the pool range from 1 through n and the number of ISDN-D channels of the pool range from 1 through m; and at least one analog subscriber line termination unit (72, 73) to be connected with a PSTN terminal (24, 28, 29) through an analog subscriber line (57, 60, 61), the analog subscriber line termination unit (72, 73) comprising a protocol converter (723, 722, 732, 733) for converting between analog loop signaling applied on the analog subscriber line (57, 60,61) and messages transported over one of the ISDN-D channels of the pool of ISDN channels (703) provided by the DSL transceiver (70), and the analog subscriber line termination unit (72, 73) comprising a bearer channel connector (721, 731) performing an analog to digital conversion between the analog subscriber line (57, 60, 61) and one of the ISDN-B channels of the pool of ISDN channels (703) provided by the DSL transceiver (70).

2. The network termination unit (31 to 34) according to claim 1,
**characterized in**
**that** the protocol converter (723, 722, 732, 733) converting between a NMDS protocol and the signaling protocol applied on the analog subscriber line (57, 60, 61).

3. The network termination unit (31 to 34) according to claim 1,
**characterized in**
**that** the network termination unit (31 to 34) further comprising a ISDN subscriber line termination unit (71) to be connected with at least one ISDN terminal (22, 23, 26, 27) through at least one ISDN subscriber line (56, 59), the ISDN subscriber line termination unit (71) comprising a connector (711) for connecting the ISDN subscriber line (56, 59) with an ISDN channel of the pool of ISDN channels (703) provided by the DSL transceiver (70).

4. A network termination unit (31 to 34) according to claim 1,
**characterized in**
**that** the network termination unit (31 to 34) further comprising a control unit (712) for dynamically allocating ISDN-B channels of the pool of ISDN channels (703) to analog subscriber line termination units (72, 73).

5. The network termination unit (31 to 34) according to claim 1,
**characterized in**
**that** the network termination unit (31 to 34) further comprising a control unit (712) for allocating ISDN-B channels of the pool of ISDN channels (703) to analog subscriber line termination units (72 to 73) and to ISDN subscriber lines (56, 59).

6. The network termination unit (31 to 34) according to claim 4,
**characterized in**
**that** the control unit (712) dynamically varying the number of ISDN channels of the pool of ISDN channels (703) by triggering the establishment and/or release of synchronous channels provided by the DSL transceiver unit (70).

7. The network termination unit (31 to 34) according to claim 1,
**characterized in**
**that** the network termination unit (31 to 34) is a universal network termination unit further comprising a PSTN interface (720) served by at least two analog subscriber line termination units (72, 73), an ISDN interface (710) served by at least one ISDN line termination unit (71), and at least one broadband access interface (700) for exchanging broadband packet traffic served by the DSL transceiver unit (70).

8. A subscriber line board 41, 42) of a switching system (1) for supporting communication between the switching system (1) and one or several terminals (21 to 29) connected with the subscriber line board (41 to 42) through associated subscriber lines (51 to 61),
**characterized in**
**that** the subscriber line board (41 to 42) comprising: a number of DSL transceiver units (81, 82), in particular SHDSL transceiver units, for transferring in both directions over an associated subscriber line (51 to 54), in particular over one or several twisted pair lines, broadband packet traffic as well as a number of synchronous channels, the DSL transceiver unit (81, 82) providing a pool of ISDN-B and ISDN-D channels (811, 821) based on such synchronous channels, where is the numbers of ISDN-B channels of the pool range from 1 through n and the number of ISDN-D channels of the pool range from 1 through m; and a broadband interface unit (84) connected with the number of DSL transceiver units (81, 82) for handling the broadband packet traffic exchanged with terminals to be connected with subscriber lines (51 to 54) through a network termination unit (31 to 34) comprising an DSL transceiver unit (70); and a narrowband interface unit (83) connected with the DSL transceiver unit (81, 82) for handling data exchanged over the synchronous channels, the narrowband interface unit (83) comprising a protocol converter (834) for converting between the internal protocol of the switching system (1) and signaling messages representing analog loop signaling, the signaling messages are transported over an ISDN-D channel provided by the DSL transceiver unit (81, 82).

9. The subscriber line board (41, 42) according to claim 8,
**characterized in**
**that** the subscriber line board (41, 42) is a universal subscriber line board further comprising a number of ISDN connection units (835, 836) and a number of PSTN connection units (838, 837), and a common subscriber line connection unit (85) for variably connecting the subscriber lines (51 to 54) with DSL transceiver units (81, 82), ISDN connection units (835, 836) and PSTN connection units (838, 837).

10. A method for supporting communication between a switching system (1) and a PSTN terminal (28, 29) connected with a network termination unit (34) through an analog subscriber line (60, 61),
**characterized in**
**that** the method comprising the steps of:
transferring in both directions over a subscriber line (54) between the network termination unit (34) and a subscriber line board (42) of the switching system (1), in particular over one or several twisted pair lines, broadband packet traffic as well as a number of synchronous channels; providing at least one ISDN-B channel and one ISDN-D channel based on such synchronous channels;
converting between analog loop signaling applied on the analog subscriber line (60, 61) and digital signaling messages transported over the ISDN-D channel; and
performing an analog to digital conversion between the analog subscriber line (60, 61) and the ISDN-B channel.
